# EUROPÄISCHE PATENTSCHRIFT

(11) **EP 0 804 992 B1**
(45) Veröffentlichungstag und Bekanntmachung des Hinweises auf die Patenterteilung: **19.06.2002**
(21) Anmeldenummer: 97106963.8
(22) Anmeldetag: 26.04.1997
(51) Int. Cl.: B23K 11/06

(54) **Verfahren und Vorrichtung zur Schweissdruckerzeugung bei einer Rollnahtschweissmaschine**
Process and device for generating the welding pressure during roller seam welding
Procédé et dispositif pour la mise en oeuvre de la pression de soudage lors du soudage continu à la molette

(30) Priorität: 02.05.1996 CH 110496
(43) Veröffentlichungstag der Anmeldung: 05.11.1997
(73) Patentinhaber: ELPATRONIC AG, 8962 Bergdietikon (CH)
(72) Erfinder: Takahashi, Nobuo, Saitama (JP); Kobayashi, Kiyoshi, Saitama (JP); Takamatus, Akira, Saitama (JP); Wenk, Daniel, 5400 Baden (CH)

(56) Entgegenhaltungen:
- EP-A- 0 685 288
- GB-A- 1 320 597
- US-A- 2 412 166
- PATENT ABSTRACTS OF JAPAN vol. 8, no. 195 (M-323), 7.September 1984 & JP 59 085382 A (TOUYOU SEIKAN KK), 17.Mai 1984,
- PATENT ABSTRACTS OF JAPAN vol. 6, no. 253 (M-178), 11.Dezember 1982 & JP 57 149069 A (FUJI KOGYOSHO : KK), 14.September 1982,

## Beschreibung

Die Erfindung betrifft ein Verfahren zur Schweisskrafterzeugung gemäss Oberbegriff des Anspruchs 1. Ferner betrifft die Erfindung eine diesbezügliche Vorrichtung zur Schweisskrafterzeugung gemäss Oberbegriff des Anspruchs 5. Derartige Verfahren und Vorrichtung sind aus der JP-A-57149069 bekannt.

Bei Schweissmaschinen mit Rollenelektroden, bei denen die eigentliche Elektrode von einer auf den Rollen laufenden Drahtelektrode gebildet sein kann, ergibt sich unter Umständen eine ungenügende Verschweissung beim ersten Schweisspunkt eines zwischen die Rollen eingeschobenen Schweissgutes mit Stumpfnaht oder Ueberlappungsnaht, insbesondere einer Dosenzarge. Dieses Problem tritt insbesondere bei den heute erzielbaren hohen Schweissgeschwindigkeiten auf. Die Massenträgheit der Schweissrollen, beim Dosenzargenschweissen insbesondere der grösseren äusseren Rolle, bewirkt anfänglich einen zu grossen Schweissdruck und damit einen sehr geringen elektrischen Widerstand der Ueberlappungsnaht, was zu ungenügender Verschweissung führen kann. Dieses andererseits kann zu Mikroleckagen der so gefertigten Dosen (insbesondere Aerosoldosen) führen, auch wenn sich der erste Schweisspunkt bei solchen Dosen im Bördelungsbereich befindet. Der Schweissdruck muss aber für die übrigen Nahtbereiche einen genügend grossen Wert erreichen, damit auch ein sicherer Transport durch die Schweisszone bewirkt werden kann und ein zu grosses Nachschwingen der Schweissrollen nach dem Einschieben des Schweissgutes zwischen die Rollen vermieden werden kann.

JP-A-57 149069 zeigt eine Rollnahtschweissmaschine mit einer Feder zur Erzeugung der Sollschweisskraft und einer zusätzlichen Magnetanordnung zur Schwingungsunterdrückung bei Auslenkungen der Schweissrolle, die ungefähr die doppelte Blechdicke des Schweissgutes überschreiten. Das Problem des ersten Schweisspunktes wird dadurch nicht gelöst. JP-A-59 085382 zeigt die Kombination einer Luftfeder mit einer Schraubenfeder derart, dass die Schraubenfeder das träge Ansprechen der Luftfeder kompensiert, wobei alleine die Luftfeder die Sollschweisskraft erzeugt. Es kann bei dieser Kombination eine Schweisskraftüberhöhung auftreten.

Der Erfindung liegt deshalb die Aufgabe zugrunde, dass bei korrekter Schweissung entlang der Schweissnaht das Problem des ersten Schweisspunktes nicht mehr oder in geringerem Masse auftritt.

Dieses Problem wird bei einem Verfahren und der Vorrichtung der eingangs genannten Art durch die kennzeichnenden Merkmale des Anspruchs 1 bzw. des Anspruchs 5 gelöst.

Dies erlaubt es, am Anfang des Schweissvorganges, wenn das zu schweissende Gut mit seiner Vorderkante die Schweissrollen erreicht und diese auseinanderzudrücken beginnt, eine geringe Schweisskraft einzustellen; allenfalls sogar eine Schweisskraft null, so dass nur die Massenträgheit der Rolle gegenüber der vom Schweissgut erzwungenen Auslenkung als wirksame Schweisskraft übrigbleibt. Sobald sich das Schweissgut aber weiter zwischen die Rollen geschoben hat, so dass diese eine grössere Auslenkung erfahren, kann die grössere, übliche Schweisskraft ausgeübt werden. Es ergibt sich somit anfänglich eine geringere Schweisskraft und somit eine gute Verschweissung des ersten Punktes und anschliessend eine grössere, der üblichen Schweisskraft entsprechende Schweisskraft. Die Zunahme der Schweisskraft nach einer gewissen Auslenkung hat sich ferner als vorteilhaft für das Schwingungsverhalten der Rolle erwiesen, was andererseits die Qualität der Schweissnaht verbessert.

Die Aenderung der Schweisskraft erfolgt dabei bei einer vorbestimmten einstellbaren Auslenkung der Rolle.

Weiter bevorzugt ist es, wenn beim Ueberlappnahtschweissen, wo also ein Schweissgut mit der doppelten Blechdicke zwischen die Rollen eingeschoben wird, der Uebergang von der geringen Schweisskraft zur grösseren Schweisskraft bei einer Auslenkung erfolgt, die ungefähr der einfachen Blechdicke entspricht.

Im folgenden werden Ausführungsbeispiele der Erfindung anhand der Zeichnungen näher erläutert. Dabei zeigt
Figur 1 grob schematisch eine Ansicht der Schweissrollen einer Rollnahtschweissmaschine; und
Figur 2 ein Weg/Kraft-Diagramm für die in Figur 1 gezeigte Federanordnung.

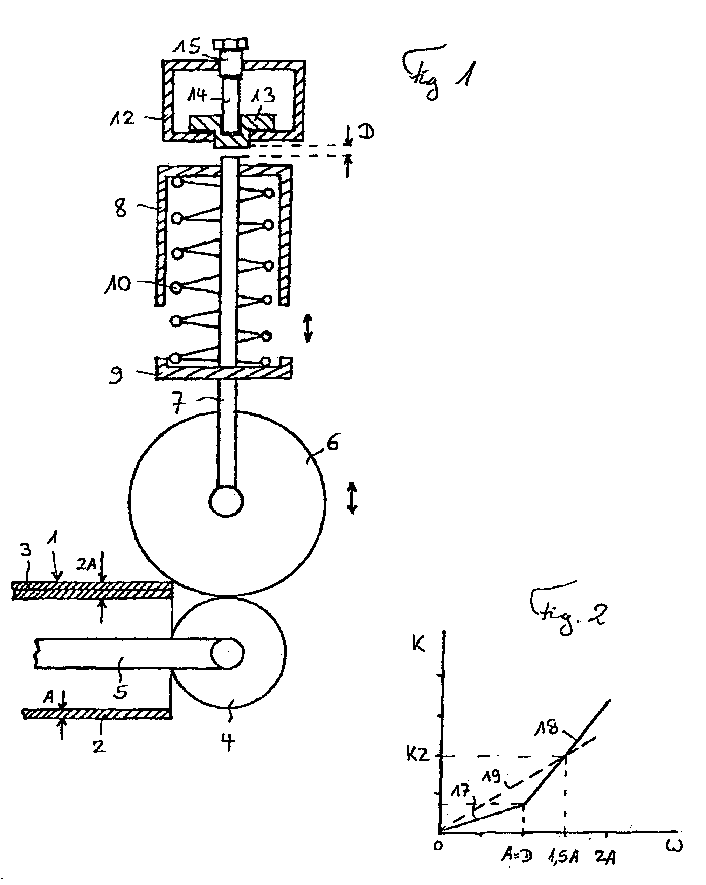

Figur 1 zeigt grobschematisch das Einführen eines Schweissgutes 1 in Form einer Dosenzarge zwischen die Schweissrollen einer Rollnahtschweissmaschine. Der Aufbau und die Funktionsweise einer Rollnahtschweissmaschine ist an sich wohl bekannt und wird hier nicht im Detail wiedergegeben. Bei einer Rollnahtschweissmaschine wird die Schweissnaht zwischen zwei Elektrodenrollen 4 und 6 gebildet, wobei als eigentliche Elektrode in der Regel jeweils ein auf der Rolle laufender Schweissdraht vorgesehen ist. Figur 1 zeigt die Verhältnisse beim Schweissen einer Dosenzarge 1, welche aus dünnem Blech der Dicke A gerundet worden ist, und welche im Bereich der Schweisszone eine Ueberlappungsnaht 3 bildet, die im unverschweissten Zustand eine Dicke von 2A aufweist. Die Rollnahtschweissmaschine weist die beiden Schweissrollen 4 und 6 auf, wobei die untere Schweissrolle 4 an einem Unterarm 5 angeordnet ist. Die Lagerung dieses Unterarmes 5 ist bekannt und ist in der Figur nicht dargestellt. In der Regel ist der Unterarm 5 derart federnd gehalten, dass die Schweissrolle 4 gegen die obere Schweissrolle 6 hin vorgespannt ist. Die obere Schweissrolle 6 wird bei bekannten Maschinen durch eine einstellbare konstante Kraft gegen die untere Schweissrolle 4 gedrückt. Die Einstellung erfolgt dabei herkömmlicherweise durch eine Schweisskraftfeder, welche mehr oder weniger vorgespannt wird. Bei dem in Figur 1 gezeigten Ausführungsbeispiel der Erfindung ist nun zunächst ebenfalls eine Feder 10 vorgesehen, welche eine Kraft auf die Schweissrolle 6 ausübt. Diese Feder 10 ist in einer maschinenfesten Hülse 8 angeordnet und ist damit mit ihrem oberen Ende maschinenfest abgestützt. Die Schweissrollenhalterung weist einen vertikal beweglichen Stössel 7 auf, welcher einen Teller 9 trägt, der das untere Ende der Feder 10 aufnimmt. Eine vertikale Bewegung der Schweissrolle 6 führt somit zu einer vertikalen Bewegung des Tellers 9 und damit zu einer Kompression oder Dekompression der Feder 10. Die Feder 10 übt somit eine Schweisskraft auf die Rolle 6 bzw, auf das zu schweissende Gut aus, welche durch Verstellung des Tellers 9 oder der Hülse 8 durch entsprechende Aenderung der Vorspannung der Feder 10 eingestellt werden kann. In dem gezeigten Beispiel ist oberhalb der Hülse 8 ein maschinenfestes Gehäuse 12 angeordnet, in welchem ein Federelement 14 derart angeordnet ist, dass es eine Kraft ebenfalls in vertikaler Richtung in der Längsachse des Stössels 7 ausüben kann. In dem gezeigten Beispiel ist dabei das Federelement mit seinem unteren Teil in einem Anschlagteller 13 gehalten, der sich bei Ruhelage des Federelementes auf eine Flanke des Gehäuses 12 abstützt. Das obere Ende des Federelementes 14 ist an einer Einstellschraube 15 gehalten, durch welche in dem gezeigten Beispiel die Vorspannung des Federelementes 14 verändert werden kann. Das Federelement 14 kann ebenfalls eine Schraubenfeder ähnlich der Feder 10 sein oder kann z.B. auch ein Luftfederelement sein, in welchem komprimierte Luft die Federwirkung ergibt. Dies gilt natürlich auch für die Feder 10, welche ebenfalls von einem anderen als dem dargestellten Schraubenfederelement gebildet werden kann. Das Gehäuse 12 ist höhenverstellbar an der Maschine so angeordnet, dass bei der Ruhelage der Schweissrollen, wenn also die obere Schweissrolle 6 auf der unteren Schweissrolle 4 aufliegt und noch kein Schweissgut zwischen die Rollen geschoben worden ist, ein vorbestimmter Abstand D zwischen dem oberen Ende des Stössels 7 und der ihm zugewandten Fläche des Tellers 13 einstellbar ist. Das Gehäuse 12 kann dazu mit nicht dargestellten, an sich bekannten Führungsmitteln versehen sein, welche z.B. über ein Schraubgewinde die Höheneinstellung des Gehäuses erlauben.

Beim Betrieb der gemäss diesem Ausführungsbeispiel der Erfindung ausgerüsteten Rollnahtschweissmaschine ergibt sich der erfindungsgemässe Effekt, dass eine sich mit der Rollenauslenkung ungleichmässig ändernde Schweisskraft erzeugt wird. Dies kann anhand der Figur 1 erläutert werden, wenn man annimmt, dass die in Figur 1 gezeigte Dosenzarge zwischen die Schweissrollen 4 und 6 eingeschoben wird, um die Schweissung der Ueberlappnaht 3 auszuführen. Dabei werden die Schweissrollen 4 und 6 auseinandergedrückt und die Schweissrolle 6 wird vertikal nach oben bewegt. Bei dieser Bewegung wird zunächst die Feder 10 wirksam, welche zusammen mit der Massenträgheit vor allem der Schweissrolle 6 die Schweisskraft am Zargenanfang bewirkt. Sobald die Auslenkung der oberen Schweissrolle 6 soweit erfolgt ist, dass der Abstand D durch den sich ebenfalls nach oben bewegenden Stössel 7 aufgebraucht ist, beaufschlagt der Stössel 7 den Teller 13 und bei einer weiteren Auslenkung wird das Federelement 14 komprimiert und übt ebenfalls eine Kraft auf den Stössel 7 und damit auf die Schweissrolle 6 aus. Sobald die Auslenkung der Schweissrolle 6 also den Betrag D überschreitet, wirkt die kombinierte Kraft der Federelemente 10 und 14, anfänglich hingegen, solange die Auslenkung der Schweissrolle den Betrag D noch nicht erreicht, wirkt nur die Kraft des Federelementes 10. Auf diese Weise lässt sich das Problem des ersten Schweisspunktes lösen, da die Feder 10 als sehr weiche Feder ausgelegt werden kann, die auf den Zargenanfang nur eine geringe Kraft ausübt, die gerade ausreicht um den sicheren Zargentransport zwischen den Schweissrollen auch anfänglich zu gewährleisten. Sobald die Kante überwunden ist und die Auslenkung der Schweissrolle 6 grösser geworden ist, kommt das zweite, in der Regel härter ausgelegte Federelement 14 zum Zuge, dessen Federkraft sich zum Federelement 10 hinzuaddiert und bewirkt eine für das jeweilige Schweissgut, im gezeigten Beispiel die Ueberlappungsnaht 3 geeignete Sollschweisskraft. Das Federelement 10 kann dabei z.B. auf eine kleine Kraft von ca. 30 daN eingestellt sein. Bevorzugterweise wird beim Schweissen einer Dosenzarge mit Ueberlappungsnaht der Abstand D ungefähr der einfachen Blechdicke A gewählt. Der Abstand D kann sich dabei z.B. im Bereich von 50-150 % des Wertes A bewegen oder auch im Bereich von 70-130 % des Wertes A, bevorzugterweise auch im Bereich des Bereiches 80-120 % von A oder weiter bevorzugt im Bereich von 90-110 % des Wertes A. Bei anderen Schweissungen, z.B. bei der Schweissung einer Stumpfnaht einer Behalterzarge können sich andere Werte für den Abstand D ergeben, z.B. kann dann der Abstand D die Hälfte der Blechdicke A betragen.

Figur 2 zeigt schematisch die Federkraft K über der Auslenkung W für das als Beispiel dargestellte Zweifedersystem. Bis zur Auslenkung A, welche im gezeigten Beispiel gleich dem Abstand D ist, erfolgt die Kraftzunahme mit der Federkonstante des Federelementes 10 gemäss dem Kurvenabschnitt 17. Sobald die Auslenkung den Wert A gleich D erreicht hat, kommt das zweite Federelement 14 hinzu und es ergibt sich der Kurvenabschnitt 18, in welchem die Federkräfte der beiden Federelemente 10 und 14 addiert sind. Im Schweissbetrieb entlang der Naht hinter der Vorderkante ergibt sich durch die verquetschung der Ueberlappnaht eine Auslenkung von z.B. 1,5 A, was der gesamten Federkraft K2 entspricht, welche die Sollschweisskraft darstellt. Würde diese Federkraft wie bis anhin mit einer einzigen Feder erzeugt, so müsste diese einen Kurvenverlauf 19 aufweisen, wie dies gestrichelt in Figur 2 dargestellt ist. Es ist daraus ersichtlich, dass im Wegbereich 0-A durch die einzelne Feder eine wesentlich höhere Schweisskraft auf die Vorderkante der Zarge ausgeübt wird, was das Schweissproblem des ersten Punktes deutlich erhöht. Durch die sich mit der Auslenkung ungleichmässig ändernde Kraft gemäss der Erfindung kann daher das Problem der Schweissung des ersten Punktes auf einfache Weise umgangen werden. Anstelle der als Beispiel in Figur 1 gezeigten speziellen Anordnung von zwei Federn kann natürlich auch eine andere Anordnung von zwei Federn gewählt werden, welche z.B. ineinander angeordnet sein können oder es kann eine Anordnung mit nur einer Feder gewählt werden, welche eine sich derart ändernde Steigung aufweist, dass sich ein ähnlicher Effekt mit einem ungleichmässigen Anstieg der Federkraft ergibt. Es können natürlich auch mehr als zwei Federn vorgesehen sein, welche beabstandet voneinander angeordnet sind. Eine besondere Ausführung ergibt sich, wenn die Feder 10 weggelassen wird, so dass - nach der Auslenkung D - nur die Feder 14 wirksam wird. Die Federanordnung weist dann nur die Feder 14 auf und die anfängliche Schweisskraft wird nur durch die Massenträgheit der Rolle 6 und des Stössels 7 gebildet, bis die zunehmende Auslenkung auch die Feder 14 aktiviert.

Es hat sich gezeigt, dass die ungleichmassige Aenderung der Federkraft weiter einen vorteilhaften Einfluss auf das Schwingungsverhalten des gesamten Systems aus der gefederten Schweissrolle 6 und der ebenfalls gefederten Schweissrolle 4 ausübt. Ein Ueberschwingen der Schweissrolle 6 und ein Nachfolgen der Schweissrolle 4 wird durch die mit der Auslenkung ungleichmässig ändernde Schweisskraft geringer gehalten, was einen positiven Einfluss auf die Schweissqualität der Naht hat. Dies ist durch die steifere Federkennlinie 18 im Bereich A bis 2A gegenüber der herkömmlichen Federkennlinie 19 erklärbar.

Anstelle des gezeigten Beispiels, bei welchem die Rolle 6 eine mit der Auslenkung ändernde ungleichmässige Kraft erfährt, kann auch die Rolle 4 auf eine solche Weise gefedert sein. Bevorzugt wird jedoch die entsprechende Federung der massenreicheren Rolle 6. Auch beide Rollen könnten ein erfindungsgemässes, mit der Auslenkung änderndes Kraftverhalten aufweisen.

## Patentansprüche

1. Verfahren zur Schweisskrafterzeugung bei einer Schweissmaschine mit Rollenelektroden (4, 6), wobei für mindestens eine der Rollenelektroden (6) eine Federanordnung mit Federelementen (10, 14) vorgesehen ist, die eine sich mit der Rollenauslenkung ungleichmässig ändernde Kraft auf die Rolle (6) ausübt und bei der sich die Kraftzunahme bei einer vorbestimmten, einstellbaren Auslenkung (D) ändert, **dadurch gekennzeichnet, dass** die Federelemente (10, 14) der Federanordnung derart wirksam werden, dass unterhalb der vorbestimmten Auslenkung eines der Federelemente die Schweisskraft bestimmt, und oberhalb der vorbestimmten Auslenkung (D) die Sollschweisskraft durch die kombinierte Kraft der Federelemente erzeugt wird.

2. Verfahren nach Anspruch 1, **dadurch gekennzeichnet, dass** sich beim Schweissen einer Ueberlappungsnaht (3) die Kraftzunahme nach einer Auslenkung (D) ändert, die ungefähr der einfachen Blechdicke (A) entspricht.

3. Verfahren nach Anspruch 2, **dadurch gekennzeichnet, dass** die Kraftzunahme bei einer Auslenkung (D) ändert, die im Bereich von 50 bis 150 % der Blechdicke liegt, insbesondere im Bereich von 70 bis 130 % der Blechdicke, und insbesondere im Bereich von 80 bis 120 % oder 90 bis 110 % der. Blechdicke.

4. Verfahren nach Anspruch 1, **dadurch gekennzeichnet, dass** sich beim Schweissen einer Stumpfnaht die Kraftzunahme nach einer Auslenkung (D) ändert, die der halben Blechdicke (A) entspricht.

5. Vorrichtung zur Schweisskrafterzeugung an einer Schweissmaschine mit Rollenelektroden (4, 6), wobei für mindestens eine der Rollen (6) eine Federanordnung (10, 14) vorgesehen ist, die eine sich mit der Rollenauslenkung ungleichmässig ändernde Kraft auf die Rolle (6) ausübt, wobei die Federanordnung mehrere Federelemente (10, 14) umfasst, **dadurch gekennzeichnet, dass** die Federelemente derart angeordnet sind, dass sie bei zunehmender Rollenauslenkung nacheinander derart auf die Rolle (6) einwirken, dass unterhalb einer vorbestimmten Auslenkung (D) eines der Federelemente (10) die Schweisskraft bestimmt und oberhalb der vorbestimmten Auslenkung (D) die kombinierte Kraft der Federelemente (10, 14) die Sollschweisskraft bestimmt.

6. Vorrichtung nach Anspruch 5, **dadurch gekennzeichnet, dass** die Federanordnung eine schraubenlinienförmige Feder (10) und eine Luftdruckfeder (14) umfasst.

## Claims

1. Method for generating welding force in a welding machine with roller electrodes (4, 6), wherein for at least one of the roller electrodes (6) a spring arrangement with spring elements (10, 14) is provided which exerts on the roller (6) a force that varies non-uniformly with the roller deflection and whereby a change in the rise in force occurs at a predetermined and adjustable deflection (D), **characterized in that** the spring elements (10, 14) of the spring arrangement become active in such a way that below the predetermined deflection, the welding force is determined by one of the spring elements, and above the predetermined deflection (D), the required welding force is generated by the combined force of the spring elements.

2. Method according to Claim 1, **characterized in that** in the case of an overlapping weld seam (3) the change in the rise in force occurs after a deflection (D) approximately corresponding to a single sheet thickness (A).

3. Method according to Claim 2, **characterized in that** the change in the rise in force occurs at a deflection (D) which lies in the range of 50 to 150 % of the sheet thickness, particularly in the range of 70 to 130 % of the sheet thickness, and especially in the range of 80 to 120 % or 90 to 110 % of the sheet thickness.

4. Method according to Claim 1, **characterized in that** in the case of a butted weld seam the change in the rise in force occurs after a deflection (D) corresponding to half the sheet thickness (A).

5. Apparatus for generating welding force on a welding machine with roller electrodes (4, 6), wherein for at least one of the rollers (6) a spring arrangement (10, 14) is provided which exerts on the roller (6) a force that varies non-uniformly with the roller deflection, the spring arrangement comprising a plurality of spring elements (10, 14), **characterized in that** the spring elements are arranged so that as the roller deflection increases they act in succession on the roller (6) in such a way that below a predetermined deflection (D), the welding force is determined by one of the spring elements (10), and above the predetermined deflection (D), the required welding force is determined by the combined force of the spring elements (10, 14).

6. Apparatus according to Claim 5, **characterized in that** the spring arrangement comprises a helical spring (10) and a pneumatic spring (14).

## Revendications

1. Procédé pour produire une force de soudage dans une machine à souder équipée de molettes-électrodes de soudage (4, 6), dans lequel, pour au moins l'une des molettes-électrodes de soudage (6), il est prévu un aménagement flexible équipé d'éléments de ressort (10, 14), qui exerce sur la molette (6) une force qui varie de manière inégale avec l'écartement des molettes et dans lequel l'augmentation de la force varie selon un écartement réglable prédéterminé (D), **caractérisé en ce que** les éléments de ressort (10, 14) de l'aménagement flexible sont tels qu'au-dessous de l'écartement prédéterminé, l'un des éléments de ressort détermine la force de soudage tandis qu'au-dessus de l'écartement prédéterminé (D), la force de soudage théorique est produite par la force combinée des éléments de ressort.

2. Procédé selon la revendication 1, **caractérisé en ce que**, lors du soudage d'un joint à recouvrement (3), l'augmentation de la force varie selon un écartement (D) qui correspond plus ou moins à l'épaisseur simple (A) de la tôle.

3. Procédé selon la revendication 2, **caractérisé en ce que** l'augmentation de la force varie selon un écartement (D), qui se situe dans la plage de 50 à 150% de l'épaisseur de la tôle, en particulier dans la plage de 70 à 130% de l'épaisseur de la tôle, tout particulièrement dans la plage de 80 à 120% ou de 90 à 110% de l'épaisseur de la tôle.

4. Procédé selon la revendication 1, **caractérisé en ce que**, lors du soudage d'un joint bord à bord, l'augmentation de la force varie selon un écartement (D) qui correspond à la demi-épaisseur (A) de la tôle.

5. Dispositif pour produire d'une force de soudage sur une machine à souder équipée de molettes-électrodes de soudage (4, 6), dans lequel, pour au moins l'une des molettes (6), il est prévu un aménagement flexible (10, 14) qui exerce sur la molette (6) une force qui varie de manière inégale selon l'écartement des molettes, l'aménagement flexible comprenant plusieurs éléments de ressort (10, 14), **caractérisé en ce que** les éléments de ressort sont agencés de manière que, lors d'une augmentation de l'écartement des molettes, ils agissent progressivement sur la molette (6) de sorte qu'au-dessous d'un écartement prédéterminé (D), un des éléments de ressort (10) détermine la force de soudage, tandis qu'au-dessus de l'écartement prédéterminé (D), la force combinée des éléments de ressort (10, 14) détermine la force de soudage théoriqué.

6. Dispositif selon la revendication 5, **caractérisé en ce que** l'aménagement flexible comprend un ressort spiral (10) et un ressort de pression pneumatique (14).
